# EUROPEAN PATENT APPLICATION

(11) **EP 3 210 502 A1**
(43) Date of publication of application: **30.08.2017**
(21) Application number: 17397507.9
(22) Date of filing: 24.02.2017
(51) Int. Cl.: A47G 19/22, B65D 3/06

(54) **A CUP FOR DRINKS**

(30) Priority: 26.02.2016 FI 20164045 U
(71) Applicant: Starcke Oy, 27510 Eura (FI)
(72) Inventor: Harju, Ilkka, FI-15140 Lahti (FI)
(74) Representative: Berggren Oy, Tampere

(57) **Abstract**

A cup for drinks, the cup (10) comprising a side wall (26) which is made of cardboard and which has at least two overlapping material layers (14, 16), wherein between the said material layers is located a radio frequency identification identifier (12). The radio frequency identification identifier (12) can be read with a smart phone utilising near field communication technology. In the radio frequency identification identifier (12) may be stored a character string, which is a uniform resource locator address indicating a world wide web page. The radio frequency identification identifier (12) may comprise a microchip for storing readable data, and an antenna connected to the microchip, for transmitting the readable data to a radio frequency identification reader. The radio frequency identification identifier (12) may be a flexible thin strip.

## Description

### Object of the invention

The object of the solution presented is a cup for drinks. Specifically, a cup made of cardboard and provided with an RFID identifier is concerned.

### Background of the invention

The cup is a small open dish for drinks, the said dish being intended for drinking and carrying drinks. The drinks are usually in liquid form, such as water, tea or coffee.

The cups are made of paper material, especially cardboard, which is multilayered and provides sufficient rigidity and a printable surface. The cup wall may have two or more overlapping layers. Between two overlapping layers may remain a layer of air which acts as an insulator when the cup holds a hot drink.

The cardboard on the inner surface of the cup is made watertight with a coating, such as a plastic coating, which is, for example, polyethylene (PE). On the outer surface of the cup can be printed colour surfaces, pictures, patterns or texts, for example, by the offset printing process.

Cups made of cardboard are usually disposable. Cups are used in various public events, in which case advertisements or other information can be printed on them. Cups have not been utilised sufficiently, for example, for advertising or distributing information or this has not been technically possible due to the disposable nature and small size of the cup.

### A brief summary of the invention

The cup for drinks according to the solution presented is disclosed in claim 1. The other claims give other specifying examples of the solution presented.

The cup for drinks according to the solution presented comprises a side wall which is made of cardboard and has at least two material layers on top of each other. Between these material layers is placed an RFID identifier.

In the cup according to the solution presented is utilised radio frequency remote identification, especially an RFID identifier (Radio Frequency Identification), which is utilised in remote reading of data. The so-called escort memory or tag of the RFID identifier contains readable data.

According to an example, the data in the RFID identifier may be stored in the microchip of the identifier which is connected to the antenna of the identifier. The antenna makes it possible to transmit the data in the chip to the RFID reader. The RFID identifier may be of a passive type and thus not have a power supply of its own. The RFID reader may direct a radio frequency scan at the identifier antenna, the scan inducing a low electric current for the use of the identifier and the identifier will be able to send a response to the RFID reader.

According to an example, the data in the RFID identifier may be, for example, a character string, which is an URL address (Uniform Resource Locator) indicating a WWW page.

According to an example, a mobile phone, for example a smart phone, may act as an RFID reader utilising so-called NFC technology (Near Field Communication). When a mobile phone further comprises a web browser, the user is able to browse texts, pictures and other information found on the WWW page indicated by the RFID identifier.

Using the RFID identifier provides an additional way of distributing information. Using the RFID identifier gives the user easy access to this information. By means of the RFID identifier, the user can be guided to the site where the information is available. Through the WWW page indicated by the RFID identifier can be distributed versatile, varying media content and current or updated information.

An RFID identifier in sticker form is easy to attach and of low cost. An RFID identifier placed between the material layers of the side wall is hidden and easy to read through the material layer of the side wall.

According to an example, the side wall of the cup has a print which is a hot foil stamping print. By means of hot foil stamping is achieved an impressive and technically finished end result. By means of hot foil stamping, on the surface of the cup are obtained versatile shiny or matt prints in different colours or with a hologram effect.

According to an example, the cardboard of the side wall of the cup has a plastic coating. With cardboard is obtained a rigid, durable and low-cost structure. The plastic coating makes the cup watertight and prevents the cardboard from becoming soaked.

### Description of the drawings

The solution presented is described in greater detail in the following and with reference to the accompanying drawing.

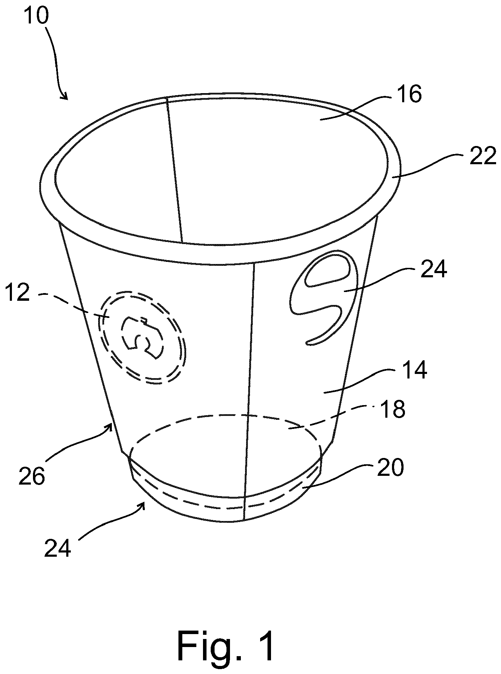

Figure 1 shows the cup for drinks provided with an RFID identifier according to an example of the solution presented.

### Detailed description of the invention

An example of the cup 10 according to the solution presented is shown in Figure 1.

The cup 10 is suitable for drinking and for carrying drinks. The drinks may be in liquid form, such as water, tea or coffee.

The cup 10 is open at the top and has a bottom 24 and a side wall 26. The side wall 26 of the cup may mainly follow the shape of a cylinder or, as shown in the example of Figure 1, a straight circular cone which is truncated and widens upwards. The bottom 24 of the cup may mainly follow the shape of a circle. The bottom 24 and the side wall 26 are attached to one another and form a tight container. On the side wall 26 of the cup, on its outer surface, may be attached a handle which is of a paper material, such as cardboard.

The maximum height of the cup 10 may be, for example, 70 to 110 mm and its maximum diameter may be, for example, 70 to 90 mm.

The side wall 26 of the cup may be of cardboard, as shown in the example of Figure 1, and so may the bottom 24. The surface of the cup's bottom 24 and side wall 26 located inside the cup 10 may be provided with a coating to make the cup 10 watertight. The coating may be a plastic coating, for example, polyethylene (PE).

The bottom 24 has at least one material layer. The bottom 24 may be encircled by a downwards directed collar which is attached to the side wall 26, for example, by means of pressing and heat. In the bottom 24 may in addition to or instead of cardboard also be used other materials or paper materials.

The side wall 26 comprises at least two overlapping material layers in such a way that the side wall 26 is at least partly at least two-layered. According to an example and Figure 1, the side wall 26 may be two-layered throughout, including an outer layer 14 and an inner layer 16, one surface of which is located inside the cup 10.

According to an example and Figure 1, between the outer layer 14 and the inner layer 16 is formed a layer of air which acts as an insulator.

Both the inner layer 16 and the outer layer 14 may be formed of a sector-shaped material blank from which the sector-like part has been cut off. Both the round inner side and round outer side of the side wall are obtained by attaching the sides of the sector to each other. The inner layer 16 and the outer layer 14 are placed on top of one another and the upper edge of the inner layer 16 may be folded onto the upper edge of the outer layer 14, thus forming the edge 22 of the cup. The lower edge of the outer layer 14 may have an upwards directed collar which settles against the outer surface of the inner layer 16. The outer layer 14 may be attached to the inner layer 16 at one or more points, for example, by gluing.

According to the solution presented and Figure 1, an RFID identifier 12 is placed between the two material layers of the side wall 26. In the RFID identifier 12 is stored the desired data which is readable by an RFID reader, for example, a smart phone.

According to an example and Figure 1, the RFID identifier 12 contains a microchip in which the above-mentioned data is stored, and an antenna by means of which the said data can be read. The RFID identifier 12 may be of a passive type. The diameter of the RFID identifier 12 may be, for example, 20 to 30 mm. The RFID identifier 12 may be a flexible thin strip having a thickness of, for example, less than 0.2 mm.

According to an example and Figure 1, the RFID identifier 12 may be of a sticker type or have an adhesive surface for attachment.

According to an example and Figure 1, the RFID identifier 12 is located between the outer layer 14 and the inner layer 16. The RFID identifier 12 is attached on the inner surface of the outer layer 14 or on the outer surface of the inner layer 16. Over the RFID identifier 12 may be placed a protective layer, such as a paper sticker.

According to an example and Figure 1, on the side wall 26 of the cup, for example on its outer surface or on the outer surface of the outer layer 14, may be at least one print 24. The print 24 may form, for example, a colour surface, one or more pictures or patterns, or text, or a combination of these. The print 24 may be at the RFID identifier 12 and present, for example, an instruction or symbol indicating that the cup 10 contains a readable RFID identifier 12 or a place where the RFID identifier 12 can be read.

According to an example, the print 24 is produced by hot foil stamping, wherein a metal foil is attached to the side wall 26 by means of pressing and heat.

The solution presented is not limited to the foregoing alternatives and examples, but may be applied within the limits defined in the accompanying claims.

## Claims

1. A cup for drinks, the cup (10) comprising
a side wall (26) which is made of cardboard and which has at least two overlapping material layers (14, 16), **characterised in that**
between the said material layers is located a radio frequency identification identifier (12).

2. The cup according to claim 1, wherein the radio frequency identification identifier (12) can be read with a smart phone utilising near field communication technology.

3. The cup according to claim 1, wherein in the radio frequency identification identifier (12) is stored a character string, which is a uniform resource locator address indicating a world wide web page.

4. The cup according to claim 2, wherein in the radio frequency identification identifier (12) is stored a character string, which is a uniform resource locator address indicating a world wide web page.

5. The cup according to claim 1, wherein the side wall (26) has a print which is a hot foil stamping print.

6. The cup according to claim 1, wherein the cardboard of the side wall (26) has a plastic coating.

7. The cup according to claim 1, wherein the cup is open at the top, and wherein the cup further comprises a bottom (24) attached to the side wall (26) and having at least one material layer.

8. The cup according to claim 1, wherein the cup follows the shape of a straight circular cone which is truncated and widens upwards.

9. The cup according to claim 1, wherein the side wall (26) comprises an outer layer (14) and an inner layer (16), wherein the radio frequency identification identifier (12) is located between the outer layer (14) and the inner layer (16), and wherein the radio frequency identification identifier (12) is attached on the inner surface of the outer layer (14) or on the outer surface of the inner layer (16).

10. The cup according to claim 1, wherein the radio frequency identification identifier (12) comprises
a microchip for storing readable data, and
an antenna connected to the microchip, for transmitting the readable data to a radio frequency identification reader.

11. The cup according to claim 3, wherein the radio frequency identification identifier (12) comprises
a microchip for storing the character string, and
an antenna connected to the microchip, for transmitting the character string to a radio frequency identification reader.

12. The cup according to claim 1, wherein the radio frequency identification identifier (12) is a flexible thin strip.

13. The cup according to claim 9, wherein the radio frequency identification identifier (12) is a flexible thin strip.

14. The cup according to claim 10, wherein the radio frequency identification identifier (12) is a flexible thin strip.
